# EUROPEAN PATENT APPLICATION

(11) **EP 3 170 737 A1**
(43) Date of publication of application: **24.05.2017**
(21) Application number: 15821330.6
(22) Date of filing: 14.07.2015
(51) Int. Cl.: B63J 4/00, C02F 1/50, B01F 7/26, B63B 13/00

(54) **DEVICE FOR STORING AND DISSOLVING CHEMICAL FOR DISINFECTING BALLAST WATER**

(30) Priority: 14.07.2014 KR 20140088151
(71) Applicant: NK Co. Ltd., Busan 618-817 (KR)
(72) Inventor: PARK, Sung jin, Busan 604-777 (KR); KIM, Ki Wook, Busan 604-751 (KR); KIM, Sang Yong, Changwon-si Gyeongsangnam-do 645-510 (KR); LEE, Jin Joo, Busan 604-850 (KR)
(74) Representative: V.O.
(86) International application number: PCT/KR2015/007320
(87) International publication number: WO 2016/010352

(57) **Abstract**

Provided is a device for storing and dissolving a chemical to prepare a chemical solution, in which a chemical for disinfection is dissolved and to supply the chemical solution to a ballast water piping. More particularly, the present invention relates to a device for storing and dissolving a chemical for disinfecting ballast water, in which a cylindrical holding case is fixed/installed in the vertical direction on the upper portion of a chemical dissolution tank, in which a solvent (fresh water or seawater) is introduced and stored, a chemical storage barrel having a circular or polygonal shape is inserted/installed in the vertical direction into the holding case, and a plurality of vertical chemical storage chambers are formed in the inner space of the chemical storage barrel by a radial partition plate. Further, a chemical injection opening is formed on the bottom surface of the holding case so as to correspond to one chemical storage chamber, and the chemical storage barrel is rotated in an upright state to perform quantitative injection of the chemical through the chemical dissolution tank in a natural drop type such that each chemical storage chamber sequentially corresponds to the chemical injection opening, thereby more safely managing and using an oxidizer type chemical having toxicity harmful to human bodies. Further, while each chemical storage chamber stores the exact amount of chemical required for disinfecting ballast water once, the corresponding chemical can be injected into the chemical dissolution tank without a remnant, thereby preventing unnecessary waste of the chemical and the solvent and rapidly and accurately adjusting the concentration of the required chemical solution even though a complicated control system for preparing the concentration of the chemical solution is not applied.

## Description

### [Technical Field]

The present invention relates to a device for storing and dissolving a chemical for disinfecting ballast water, in which a cylindrical holding case is fixed/installed in the vertical direction on the upper portion of a chemical dissolution tank, in which a solvent (fresh water or seawater) is introduced and stored, a chemical storage barrel having a circular or polygonal shape is inserted/installed in the vertical direction into the holding case, a plurality of vertical chemical storage chambers are formed in the inner space of the chemical storage barrel by a radial partition plate, a chemical injection opening is formed on the bottom surface of the holding case so as to correspond to one chemical storage chamber, and the chemical storage barrel is rotated in an upright state to perform quantitative injection of the chemical through the chemical dissolution tank in a natural drop type such that each chemical storage chamber sequentially corresponds to the chemical injection opening.

### [Background Art]

Generally, ballast water means fresh water or seawater for adjusting buoyancy which is filled in ballast tanks installed on both sides of the bottom of a ship to prevent the ship from losing its balance, when the ship operates while the cargo is unloaded from the ship or the amount of cargo loaded on the ship is very small.

Since various microorganisms such as pathogenic bacteria and plankton included in fresh water or seawater in an area filled with the ballast water are inhabited in the ballast water, when the microorganisms are discharged to waters in other areas without any treatment, serious marine pollution and destruction of the ecosystem due to ballast water may be largely caused.

Based on the above situation, in the United States in 1996, the national invasive species law was established, alien species were defined as intruders, and management and control for the ballast water was mandatory, and in Australia, the quarantine law was revised and the ballast water was defined as imported cargo to be quarantined and has been directly quarantined.

Meanwhile, the international maritime organization (IMO) concluded an international agreement in February, 2014 and sequentially from 2009, equipment required for disinfection and purification of the ballast water was installed on the ship, and in the case of violation, the ship should be prohibited from entering port.

As a reference, according to the ballast water treatment standard defined by the international maritime organization, the number of microorganisms (mainly, phytoplankton) of 50 µm in the ballast water discharged from the ship is less than 10 in 1 m³, the number of microorganisms (mainly, zooplankton) of 10 µm or more and less than 50 µm is less than 10 in 1 mL, the number of cholera bacteria is less than 1 cfu in 100 mL, the number of Escherichia colis is less than 250 cfu in 100 mL, and the number of enterococci is less than 100 cfu in 100 mL.

According to the trend, recently, as disclosed in Korean Patent Registration No. 10-0963351, a technique of disinfection of ballast water through injection of a chemical agent such as a chlorine disinfectant has further emerged.

As such, since most of the chemicals used for killing the microorganisms in the ballast water are oxidizing agents having toxicity, the chemicals need to be carefully handled for safety of operators, particularly, safety should be considered to be a top priority when the chemicals are handled under limited and enclosed environmental conditions, such as on board. However, until now, in order to adjust an accurate concentration of a chemical solution, an operation of injecting the chemical into a chemical dissolution tank stored with a solvent (fresh water or seawater) depends on the manpower.

On the other hand, a transfer screw device is installed at a bottom inlet of a chemical storage barrel where the chemical is stored and an outlet side of the corresponding transfer screw device is connected with the chemical dissolution tank to supply the chemical by a screw transfer method. However, since most of chemicals have powder or pellet (pill or granule) forms, there is a problem in that it is difficult to ensure injection of an accurate amount of chemical by the transfer method of the chemical through the transfer screw.

Further, when the powder or pellet type chemical is supplied by using the transfer screw, while the chemical powder or the chemical pellets are pushed out in a lump form along the transfer screw, pores between the particles and the density between the chemicals generated in the chemical lump are changed every hour. As a result, a concentration of the chemical solution in which a chemical component is dissolved easily exceeds a reference required for treatment of the ballast water or dose not reach the corresponding reference.

Due to the above factor, in the case of supplying the chemical by the screw transfer method, while a sensor mechanism sensing the concentration of the chemical solution is installed in the chemical dissolution tank, an operation needs to be involved, in which a control unit controls additional injection (at a low concentration) of chemicals by the transfer screw device or additional injection (at a high concentration) of a solvent through a chemical dissolution tank according to the concentration reference measured by the sensor mechanism to adjust the concentration of the chemical solution according to a required reference.

However, according to the method, since an injection amount of the chemical and the solvent required for disinfecting the ballast water once may exceed a reference value, unnecessary waste of the chemical and the solvent is caused and a control system for adjusting the concentration of the chemical solution needs to be additionally installed in addition to the chemical storage barrel, the transfer screw device, and the chemical dissolution tank. As a result, there has been a problem of not only an economic burden due to an increase in installation cost but also inconvenience in an operation of additionally disposing a control system in a narrow space in the ship.

### [Detailed Description of the Invention]

### [Technical Problem]

One object of the present invention provides a device for storing and dissolving a chemical for disinfecting ballast water, in which a cylindrical holding case is fixed/installed in the vertical direction on the upper portion of a chemical dissolution tank, in which a solvent (fresh water or seawater) is introduced and stored, a chemical storage barrel having a circular or polygonal shape is inserted/installed in the vertical direction into the holding case, and a plurality of vertical chemical storage chambers are formed in the inner space of the chemical storage barrel by a radial partition plate. Further, a chemical injection opening is formed on the bottom surface of the holding case so as to correspond to one chemical storage chamber, and the chemical storage barrel is rotated in an upright state to perform quantitative injection of the chemical through the chemical dissolution tank in a natural drop type such that each chemical storage chamber sequentially corresponds to the chemical injection opening, thereby more safely managing and using an oxidizer type chemical having toxicity harmful to human bodies. Further, while each chemical storage chamber stores the exact amount of chemical required for disinfecting ballast water once, the corresponding chemical can be injected into the chemical dissolution tank without a remnant, thereby preventing unnecessary waste of the chemical and the solvent and rapidly and accurately preparing the concentration of the required chemical solution even though a complicated control system for adjusting the concentration of the chemical solution is not applied.

### [Technical Solution]

An aspect of the present invention provides a device for storing and dissolving a chemical for disinfecting ballast water, the device comprising: an enclosure type chemical dissolution tank to which a solvent supply pipe with a valve mechanism and a chemical solution discharge pipe are connected, respectively; a chemical injector for storing and distributing a chemical which is injected into the chemical dissolution tank; and a stirrer for mixing and dissolving the chemical injected into the chemical dissolution tank from the chemical injector with the solvent, in which the chemical injector becomes a chemical quantitative injector which is installed on the upper side of the chemical dissolution tank in a vertical direction to perform quantitative injection of the chemical in a natural drop type, the chemical quantitative injector includes a chemical storage barrel having a cylindrical or polygonal cylindrical shape of which the upper and lower portions are opened, a holding case having a cylindrical shape to which the chemical storage barrel is inserted and installed in a vertical direction, and a driving means for rotating the chemical storage barrel inserted to the holding case in an upright state, an inner space of the chemical storage barrel is partitioned into at least three vertical (chemical storage chambers by a radial partition plate, a storage barrel support plate which is in close contact with the lower surface of the chemical storage barrel is installed below the inner side of the holding case, and meanwhile, a chemical injection opening having a fan or triangular shape corresponding to one chemical storage chamber is formed in the storage barrel support plate, and the lower portion of the holding case becomes a chemical injection pipe passing through the upper surface of the chemical dissolution tank and a detachable cover cap is assembled and installed at the top of the chemical storage barrel.

In an exemplary embodiment, the driving means includes a driven gear fixed and installed on an upper peripheral portion of the chemical storage barrel, a stepping motor for rotating the driven gear with the chemical storage barrel, and a driving gear installed on a driving shaft of the stepping motor to engage with the driven gear, and the chemical storage barrel portion corresponding to the lower side of the driven gear is inserted into the holding case and the driven gear is placed on the upper surface of the holding case. In addition, the stepping motor is installed on a motor supporter which protrudes to the outer surface of the holding case. In addition, an injection opening cover selectively opening the chemical injection opening is installed at the lower side of the storage barrel support plate and a mounting slit for inserting the injection opening cover is formed in the holding case, and the injection opening cover is constituted by a cover plate for the chemical injection opening 18a inserted into the holding case through the mounting slit and a handle portion installed on one side of the cover plate to be in close contact with the outer surface of the holding case.

Further, the lower side of the holding case is formed as a funnel portion and the chemical injection pipe is extended vertically downward by a predetermined length from the lower portion of the funnel portion, the storage barrel support plate is disposed on the direct top of the funnel portion, and a mounting flange for assembling the holding case on the chemical dissolution tank is installed at the outer peripheral portion of the chemical injection pipe. In addition, a neutralizer injection pipe having a valve mechanism and a flow meter is connected and installed onto the chemical dissolution tank, an overpressure discharger is installed on the upper surface of the chemical dissolution tank, the bottom of the chemical dissolution tank has a funnel shape, and the chemical solution discharge pipe is connected and installed with a lower vertex part of the funnel-shaped bottom. In addition, a circulation pipe having a valve mechanism and a circulation pump is additionally installed in the chemical dissolution tank, the circulation pipe becomes a pipe line connecting the lower side and the upper surface of the chemical dissolution tank, and the neutralizer injection pipe is connected to the circulation pipe.

### [Advantageous Effects]

According to the present invention, the chemical storage barrel is rotated in an upright state to perform quantitative injection of the chemical through the chemical dissolution tank in a natural drop type such that each chemical storage chamber sequentially corresponds to the chemical injection opening, thereby more safely managing and using an oxidizer type chemical having toxicity harmful to human bodies. Further, while each chemical storage chamber stores the exact amount of chemical required for disinfecting ballast water once, the corresponding chemical can be injected into the chemical dissolution tank without a remnant, thereby preventing unnecessary waste of the chemical and the solvent and rapidly and accurately adjusting the concentration of the required chemical solution even though a complicated control system for preparing the concentration of the chemical solution is not applied.

Further, the chemical injection opening formed in a storage barrel support plate of the holding case is selectively opened and closed by an injection opening cover to inject the chemical to all of the chemical storage chambers partitioned in the chemical storage barrel, thereby more sufficiently ensuring the number of times of an operation of preparing the chemical solution using a chemical injection apparatus. In addition, while a circulation piping with a circulation pump is additionally installed in the chemical dissolution tank to enable self-circulation of the chemical solution, a neutralizer injection pipe is connected to the circulation piping to neutralize a chemical solution having toxicity with a neutralizing agent, thereby more rapidly and easily performing an operation of discharging the chemical solution to the outside of the ship through combination of a stirrer and the circulation piping.

### [Brief Description of Drawings]

FIG. 1 is an exterior perspective view of a device for storing and dissolving a chemical for disinfecting ballast water.
FIG. 2 is a front cross-sectional view of FIG. 1.
FIG. 3 is an exploded perspective view of a chemical quantitative injector as a main part of the present invention.
FIG. 4 is a front cross-sectional view of a coupled state of FIG. 3.
FIG. 5 is a plan view of a holding case.
FIG. 6 is a plan view illustrating another example of a chemical storage barrel.

### [Modes of the Invention]

Hereinafter, the present invention will be described below in detail with reference to the accompanying drawings.

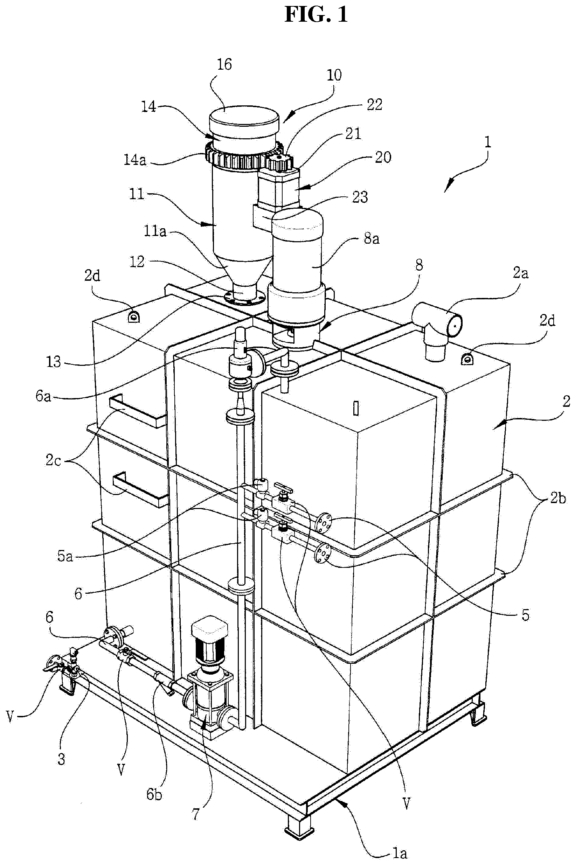

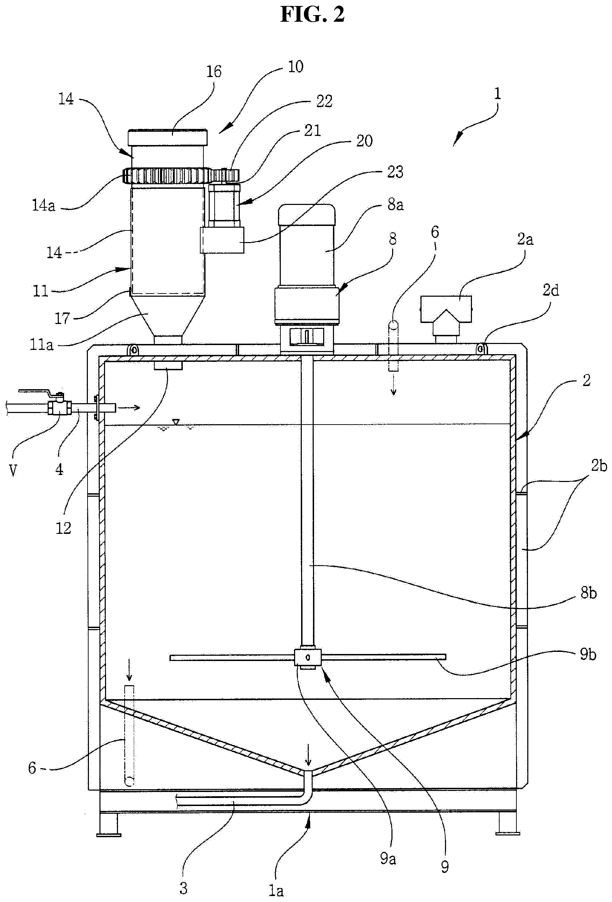

As illustrated in FIGS. 1 and 2, a device for storing and dissolving a chemical for disinfecting ballast water according to the present invention includes an enclosure type chemical dissolution tank 2 of which a solvent supply pipe 4 with a valve mechanism V and a chemical solution discharge pipe 3 are connected to an upper portion and a lower portion, respectively, a chemical quantitative injector 10 for storing and distributing a chemical, for example, a chlorine-based disinfectant or the like which is injected into the chemical dissolution tank 2, and a stirrer 8 for mixing and dissolving the chemical injected into the chemical dissolution tank 2 from the chemical quantitative injector 10 with the solvent. The chemical quantitative injector 10 and the stirrer 8 are installed on the upper surface of the chemical dissolution tank 2 in a vertical direction.

A lattice-shaped reinforcing rib 2b for reinforcing a structural strength is installed on the outer surface of the chemical dissolution tank 2, and meanwhile, for installation and maintenance of the chemical quantitative injector 10 and the stirrer 8, a ladder-shaped handle 2c is installed so that the operator may ascend to the top of the chemical dissolution tank 2, an overpressure discharger 2a and a carrying hook 2d are additionally provided on the upper surface of the chemical dissolution tank 2, and a device base 1a with a support plate and a frame is installed at the lower side of the chemical dissolution tank 2.

As illustrated in FIG. 2, the stirrer 8 includes a stirring motor 8a which is fixed and installed on the upper surface of the chemical dissolution tank 2 in a vertical direction, an impeller shaft 8b which is extended into the chemical dissolution tank 2 by passing through the upper surface of the chemical dissolution tank 2 while being connected to a drive shaft of the stirring motor 8a, and an impeller 9 which is connected and installed to the lower portion of the impeller shaft 8b. The impeller 9 is provided with a plurality of stirring wigs 9b which is radially connected and installed onto a peripheral portion of an impeller hub 9a, the bottom of the chemical dissolution tank 2 has a funnel shape, and the chemical solution discharge pipe 3 is connected and installed with a lower vertex part of the funnel-shaped bottom.

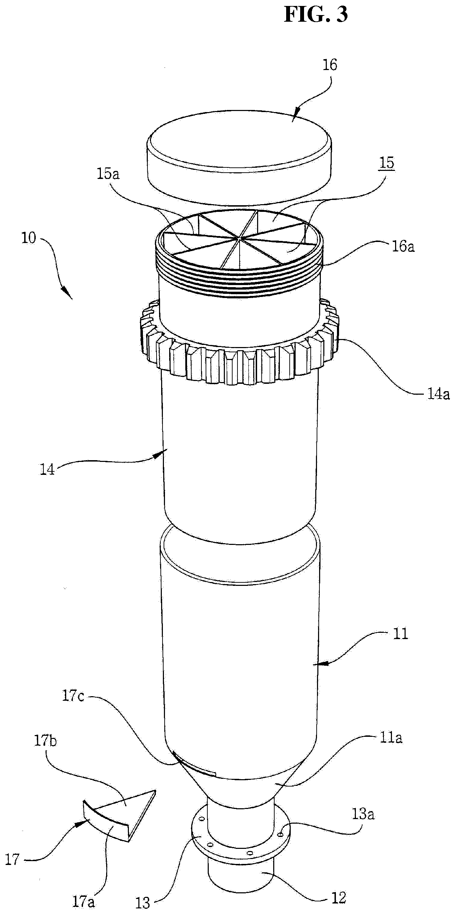

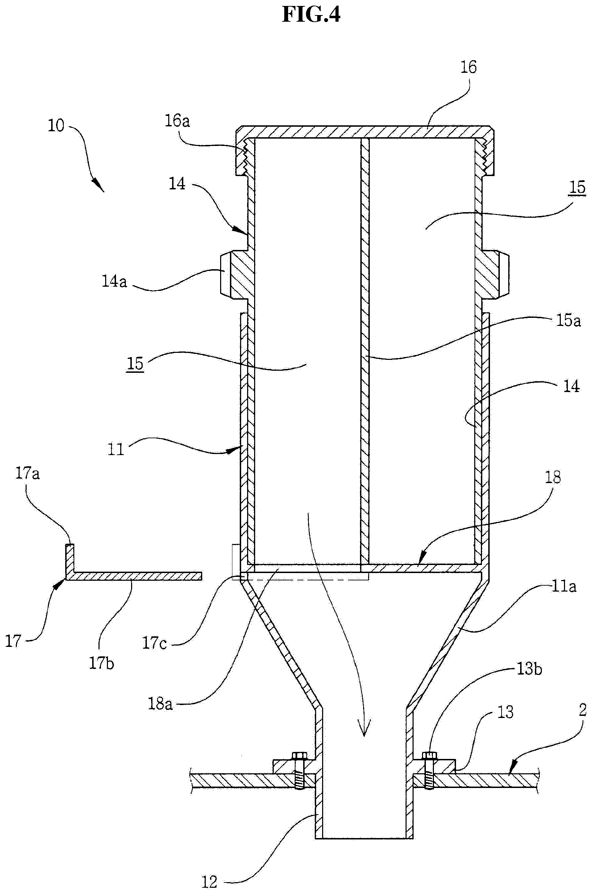

The chemical quantitative injector 10 as the first main part of the present invention is connected and installed on the upper surface of the chemical dissolution tank 2 in a vertical direction to perform quantitative injection of the chemical in a natural drop type. As illustrated in FIGS. 1 to 5, the chemical quantitative injector 10 includes a chemical storage barrel 14 having a cylindrical shape of which the upper and lower portions are opened, a holding case 11 having a cylindrical shape to which the chemical storage barrel 14 is inserted and installed in a vertical direction, and a driving means for rotating the chemical storage barrel 14 inserted to the holding case 11 in an upright state.

The lower portion of the holding case 11 becomes a chemical injection pipe 12 passing through the upper surface of the chemical dissolution tank 2, a detachable cover cap 16 is assembled and installed on the upper side of the chemical storage barrel 14, an inner space of the chemical storage barrel 14 is partitioned into a plurality of vertical chemical storage chambers 15 by a radial partition plate 15a, a storage barrel support plate 18 closed to the lower surface of the chemical storage barrel 14 is installed below the inner side of the holding case 11, and a fan-shaped chemical injection opening 18a corresponding to one chemical storage chamber 15 is formed in the storage barrel support plate 18.

Much more preferably, the lower portion of the holding case 11 is formed as a funnel portion 11a, and while the chemical injection pipe 12 is extended vertically downward by a predetermined length from the lower portion of the funnel portion 11a, a mounting flange 13 for assembling the holding case 11 on the chemical dissolution tank 2 is installed at a central outer peripheral portion of the corresponding chemical injection pipe 12, the storage barrel support plate 18 is disposed on the direct top of the funnel portion 11a, and a fastening hole 13a for fastening an assembly bolt is formed in the mounting flange 13.

When the holding case 11 having the above structure is applied, convenience of an operation of mounting the chemical quantitative injector 10 on the chemical dissolution tank 2 and a rigid mounting state may be promoted, and the holding case 11 including the chemical injection pipe 12 is fabricated in a straight cylindrical shape without forming the funnel portion 11a and then the mounting flange 13 may be installed on the lower portion of the holding case 11.

Further, the mounting flange 13, the storage barrel support plate 18 and the respective partition plates 15a may be integrally formed wit the same materials as the holding case 11 and the chemical storage barrel 14, and if necessary, the mounting flange 13, the storage barrel support plate 18 and the respective partition plates 15a may be fabricated as separate components to be bonded (welded) or assembled with the holding case 11 and the chemical storage barrel 14.

In the drawing, it is illustrated that a total of 8 chemical storage chambers 15 are partitioned in the chemical storage barrel 14 in an angle range of 45°, but under a condition that at least three chemical storage chambers 15 are formed with the same dimension and the angle range, the number or the volume of chemical storage chambers 15 may be arbitrarily adjusted according to an injection amount and the number of injection times of the chemical required for the treatment of the ballast water, and the cover cap 16 may be assembled with the chemical storage barrel 14 by a screw fastening method so as to maintain an airtight state in order to rapidly inject the chemical and prevent the injected chemical from being exposed.

The driving means of the chemical storage barrel 14 as a constituent element corresponding to the second main part of the present invention includes a driven gear 14a fixed and installed on an upper peripheral portion of the chemical storage barrel 14, a stepping motor 20 for rotating the driven gear 14a with the chemical storage barrel 14, and a driving gear 22 installed on a driving shaft 21 of the stepping motor 20 to engage with the driven gear 14a, and the driven gear 14a may also be integrally formed with the chemical storage barrel 14.

Accordingly, the chemical storage barrel 14 portion corresponding to the lower side of the driven gear 14a is inserted into the holding case 11, the driven gear 14a is placed on the upper surface of the holding case 11, and the stepping motor 20 may be installed on the upper surface of the chemical dissolution tank 2. However, for modulation, reduction in volume, and the like of the chemical quantitative injector 10, it is most preferred that a motor supporter 23 integrally protrudes on the outer surface of the holding case 11 and then the stepping motor 20 is installed on the corresponding motor supporter 23.

As such, in terms of easy installation and easy maintenance of the driving means, it is most preferred that the driven gear 14a is installed on the outer peripheral surface of the chemical storage barrel 14 and directly connected with the driving gear 22 of the stepping motor 20. In addition, other transmission means such as a belt and a pulley or a chain and a sprocket may be applied in addition to a gear type transmission means in which the driving gear 22 and the driven gear 14a engage with each other and the driving gear 22 and the driven gear 14a may be connected to each other by a belt gear (a timing belt).

However, if the chemical storage barrel 14 inserted into the holding case 11 may rotate in an upright state, any type driving mean may be applied. As a representative example, a rotation shaft is integrally connected at the lower center of the chemical storage barrel 14, that is, the portion where the respective partition plates 15a cross each other, the rotation shaft is extended to the inside of the chemical injection pipe 12 by passing through the storage barrel support plate 18, and the driving shaft 21 of the stepping motor 20 is connected with the rotation shaft of the chemical storage barrel 14 while the stepping motor 20 is disposed at the inner center of the chemical injection pipe 12 by radial support ribs.

As a constituent element corresponding to the third main part of the present invention, an injection opening cover 17 selectively opening the chemical injection opening 18a is installed at the lower side of the storage barrel support plate 18 and a long-hole type mounting slit 17c for inserting the injection opening cover 17 is formed at the upper side of the funnel portion 11a of the holding case 11. In addition, it is most preferred that the injection opening cover 17 is constituted by a cover plate 17b for the chemical injection opening 18a inserted into the holding case 11 through the mounting slit 17c and a handle portion 17a installed on one side of the cover plate 17b to be in close contact with the outer surface of the holding case 11.

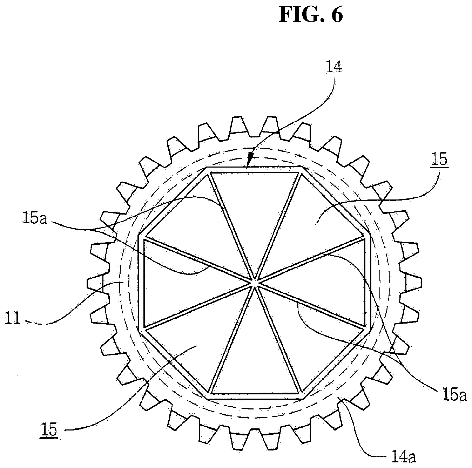

FIG. 6 illustrates another example of the chemical storage barrel 14 used in the present invention, and a chemical storage barrel 14 having a polygonal cylindrical (octagonal cylindrical) shape is used instead of the chemical storage barrel 14 having the cylindrical shape illustrated in FIGS. 1 to 5, and there is a disadvantage in that in the chemical storage barrel 14 having the polygonal cylindrical shape, the capacity of the chemical storage chamber 15 is slightly decreased. However, there is an advantage in that an uprightly rotating operation of the chemical storage barrel 14 using the driving means may be further smoothly performed by minimizing a contact area with the holding case 11.

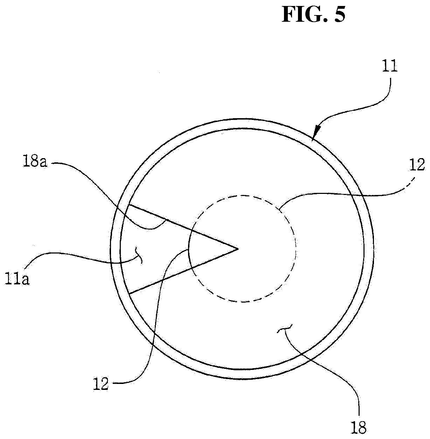

As such, in the case of using the chemical storage barrel 14 having the polygonal cylindrical shape, the chemical injection opening 18a of the storage barrel support plate 18 may have a fan shape illustrated in FIG. 5 or may have a triangular shape corresponding to the chemical storage chamber 15 of FIG. 6. The cover plate 18b of the injection opening cover 17 is good enough of having a form capable of temporarily blocking the chemical injection opening 18a below the chemical injection opening 18a and the handle portion 17a of the injection opening cover 17 may be completely in contact with the outer surface of the holding case 11 to have an arc shape so as to prevent the chemical component from being exposed to the outside.

Finally, as illustrated in FIGS. 1 and 2, a neutralizer injection pipe 5 having a valve mechanism V and a flow meter 5a is additionally connected onto the chemical dissolution tank 2 and toxicity of the chemical solution remaining in the chemical dissolution tank 2 is neutralized with the neutralizer after disinfection of the ballast water to be discharged to the outside of the ship. In the drawing, it is illustrated that two neutralizer injection pipes 5 are connected, but it is sufficient only that at leas one neutralizer injection pipe 5 is connected with the chemical dissolution tank 2.

According to the adoption of the neutralizer injection pipe 5, a circulation pipe 6 having a valve mechanism V and a circulation pump 7 is additionally installed at the front side of the chemical dissolution tank 2, and the circulation pipe 6 becomes a pipe line connecting the lower side and the upper surface of the chemical dissolution tank 2 and each neutralizer injection pipe 5 is connected to the circulation pipe 6 to self-circulate the chemical solution stored in the chemical dissolution tank 2, and meanwhile, in this process, the neutralizer may be injected through the chemical solution.

In the drawing, a pre-mixer 6a installed on the upper portion of the circulation pipe 6 primarily mixes the neutralizer with the chemical solution before injecting the neutralizer into the chemical dissolution tank 2 to further shorten a time required for neutralization reaction. In addition, a filter mechanism of a foreign material is installed in the circulation pipe 6 corresponding to an inlet of the circulation pump 7 to ensure a safe operation of the circulation pump 7, and in the drawing, a Y filter 6b is installed as the filter mechanism, but in addition, various filter mechanisms may be applied.

According to the present invention, the chemical injection opening 18a of the storage barrel support plate 18 inserts the chemical storage barrel 14 to the holding case 11 so as to correspond to one chemical storage chamber 15 formed at the chemical storage barrel 14, the driven gear 14a and the driving gear 22 engage with each other at the corresponding position, and then a required amount of the chemical is injected to each chemical storage chamber 15. While the chemical quantitative injector 10 is set in order to mount the cover cap 16 on the top of the chemical storage barrel 14, the chemical storage barrel 14 inserted to the holding case 11 rotates in an upright state by using the stepping motor 20, the driven gear 14a and the driving gear 22, and while each chemical storage chamber 15 sequentially corresponds to the chemical injection opening 18a of the storage barrel support plate 18 every one disinfection treatment of the ballast water, the chemical stored in the corresponding chemical storage chamber 15 falls into the inside of the chemical dissolution tank 2 through the chemical injection opening 18a.

As such, whenever the disinfection treatment of the ballast water is required, the chemical stored in each chemical storage chamber 15 may be injected to the chemical dissolution tank 2 in a natural fall type, thereby safely manage and use a chemical in an oxidizer type chemical having toxicity harmful to human bodies while being stored in the chemical storage barrel 14. In addition, while each chemical storage chamber stores the exact amount of chemical required for disinfecting ballast water once, the corresponding chemical can be injected into the chemical dissolution tank without a remnant when the disinfection treatment of the ballast water is required, thereby rapidly and accurately preparing the concentration of the chemical solution according to a required reference.

Accordingly, compared with a general transfer screw device described in the related art, unnecessary waste of the chemical and the solvent may be prevented, and the concentration of the chemical solution may be accurately adjusted with a required concentration by a simple method of controlling only rpm of the stepping motor 20 instead of applying a complicated control system for adjusting the concentration of the chemical solution, thereby reducing an installation cost of the device 1 for storing and dissolving the chemical, and the chemical quantitative injector 10 is disposed on the direct top of the chemical dissolution tank 2 to improve utilization of a space in a narrow ship.

Particularly, the chemical injection opening 18a formed in the storage barrel support plate 18 may be selectively opened by the injection opening cover 17 to inject the chemical to all of the chemical storage chambers 15 partitioned in the inside of the chemical storage barrel 14, thereby more sufficiently ensuring the number of times of the preparation operation of the chemical solution using the chemical quantitative injector 10, that is, the number of times of disinfection of the ballast water. The neutralizer injection pipe 5 is connected onto the circulation pipe 6 having the circulation pump 7, thereby more rapidly and easily performing the operation of neutralizing the chemical solution having toxicity with the neutralizer to discharge the chemical solution to the outside of the ship by using both the stirrer 8 and the circulation pipe 6.

In addition, the chemical dissolution tank 2, the pipe line installed with the same, and the like may use metal materials having excellent corrosion resistance, for example, stainless steel materials like the conventional method or use metal products performing anti-corrosion coating, each component of the chemical quantitative injector 10 except for the stepping motor 20 may use a plastic material by considering advantages such as lower fabrication costs and lighter weight, and each valve mechanism V may us a ball valve.

### [Industrial Applicability]

According to various exemplary embodiments of the present invention, it is possible to provide a device for storing and dissolving a chemical for disinfecting ballast water capable of preventing unnecessary water of the chemical and the solvent and simultaneously, rapidly and accurately preparing the concentration of the chemical solution required even though a complicate control system for adjusting the concentration of the chemical solution is not applied.

## Claims

1. A device for storing and dissolving a chemical for disinfecting ballast water, the device comprising: an enclosure type chemical dissolution tank 2 to which a solvent supply pipe 4 with a valve mechanism V and a chemical solution discharge pipe 3 are connected, respectively; a chemical injector for storing and distributing a chemical which is injected into the chemical dissolution tank 2; and a stirrer 8 for mixing and dissolving the chemical injected into the chemical dissolution tank 2 from the chemical injector with the solvent,
wherein the chemical injector becomes a chemical quantitative injector 10 which is installed on the upper side of the chemical dissolution tank 2 in a vertical direction to perform quantitative injection of the chemical in a natural drop type,
the chemical quantitative injector 10 includes a chemical storage barrel 14 having a cylindrical or polygonal cylindrical shape of which the upper and lower portions are opened, a holding case 11 having a cylindrical shape to which the chemical storage barrel 14 is inserted and installed in a vertical direction, and a driving means for rotating the chemical storage barrel 14 inserted to the holding case 11 in an upright state,
an inner space of the chemical storage barrel 14 is partitioned into at least three vertical (chemical storage chambers 15 by a radial partition plate 15a, a storage barrel support plate 18 which is in close contact with the lower surface of the chemical storage barrel 14 is installed below the inner side of the holding case 11, and meanwhile, a chemical injection opening 18a having a fan or triangular shape corresponding to one chemical storage chamber 15 is formed in the storage barrel support plate 18, and
the lower portion of the holding case 11 becomes a chemical injection pipe 12 passing through the upper surface of the chemical dissolution tank 2 and a detachable cover cap 16 is assembled and installed at the top of the chemical storage barrel 14.

2. The device of claim 1, wherein the driving means includes a driven gear 14a fixed and installed on an upper peripheral portion of the chemical storage barrel 14, a stepping motor 20 for rotating the driven gear 14a with the chemical storage barrel 14, and a driving gear 22 installed on a driving shaft 21 of the stepping motor 20 to engage with the driven gear 14a, and
the chemical storage barrel 14 portion corresponding to the lower side of the driven gear 14a is inserted into the holding case 11 and the driven gear 14a is placed on the upper surface of the holding case 11.

3. The device of claim 2, wherein the stepping motor 20 is installed on a motor supporter 23 which protrudes to the outer surface of the holding case 11.

4. The device of claim 2, wherein an injection opening cover 17 selectively opening the chemical injection opening 18a is installed at the lower side of the storage barrel support plate 18 and a mounting slit 17c for inserting the injection opening cover 17 is formed in the holding case 11, and
the injection opening cover 17 is constituted by a cover plate 17b for the chemical injection opening 18a inserted into the holding case 11 through the mounting slit 17c and a handle portion 17a installed on one side of the cover plate 17b to be in close contact with the outer surface of the holding case 11.

5. The device of any one of claims 1 to 4, wherein the lower side of the holding case 11 is formed as a funnel portion 11a and the chemical injection pipe 12 is extended vertically downward by a predetermined length from the lower portion of the funnel portion 11a,
the storage barrel support plate 18 is disposed on the direct top of the funnel portion 11a, and a mounting flange 13 for assembling the holding case 11 on the chemical dissolution tank 2 is installed at the outer peripheral portion of the chemical injection pipe 12.

6. The device of any one of claims 1 to 4, wherein a neutralizer injection pipe 5 having a valve mechanism V and a flow meter 5a is connected and installed onto the chemical dissolution tank 2, an overpressure discharger 2a is installed on the upper surface of the chemical dissolution tank 2,
the bottom of the chemical dissolution tank 2 has a funnel shape, and the chemical solution discharge pipe 3 is connected and installed with a lower vertex part of the funnel-shaped bottom.

7. The device of claim 6, wherein a circulation pipe 6 having a valve mechanism V and a circulation pump 7 is additionally installed in the chemical dissolution tank 2, the circulation pipe 6 becomes a pipe line connecting the lower side and the upper surface of the chemical dissolution tank 2, and
the neutralizer injection pipe 5 is connected to the circulation pipe 6.
